# EUROPEAN PATENT APPLICATION

(11) **EP 4 750 164 A1**
(43) Date of publication of application: **27.05.2026**
(21) Application number: 24843397.1
(22) Date of filing: 09.07.2024
(51) Int. Cl.: H04W 48/18, H04W 48/08, H04W 48/16, H04W 88/14

(54) **COMMUNICATION RELATED TO NETWORK SLICE GROUP**

(30) Priority: 18.07.2023 US 202363527340 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR); KIM, Seokjung, Seoul 06772 (KR)
(74) Representative: Jung, Minkyu
(86) International application number: PCT/KR2024/009776
(87) International publication number: WO 2025/018678

(57) **Abstract**

An embodiment of the present disclosure provides a method by which an AMF performs communication. The method may comprise the steps of: receiving, from a UE, a registration request message including a requested NSSAI; transmitting a request message related to a network slice to a slice-related network entity; receiving a response message including information on whether a slice list satisfies a condition related to a slice group from the network entity; and transmitting, on the basis of the response message, a registration acceptance message including allowed NSSAI to the UE.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Network slice simultaneous registration groups must be supported. However, according to prior arts, there is the problem that network slice simultaneous registration groups are applied inefficiently for a single UE. Consequently, it was not possible to effectively provide services based on network slice simultaneous registration groups to the UE.

### DISCLOSURE

### TECHNICAL SOLUTION

According to an embodiment of the present disclosure, a method performed by an AMF to perform communication. The method may include: receiving a registration request message including a requested NSSAI from a UE; transmitting the request message related to a network slice to a network entity related to a slice; and receiving, from the network entity, a response message including information related to whether a slice list satisfies conditions related to a slice group; and transmitting, to the UE, a registration accept message including an allowed NSSAI based on the response message; and transmitting, to the UE, a registration accept message including an allowed NSSAI based on the response message.

According to an embodiment, a device implementing the method is provided.

According to an embodiment of the present disclosure, a method performed by a network entity related to a slice to perform communication. The method may include: receiving a request message related to a network slice from an AMF; determining whether a slice list included in the request message satisfies conditions related to a slice group; and transmitting a response message including information related to whether the slice list satisfies conditions related to the slice group to the AMF.

According to one embodiment, a device implementing the method is provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIGS. 5 and 6 show an example of a registration procedure to which implementations of the present disclosure are applied.
FIG. 7 is an exemplary diagram illustrating an example of an architecture for implementing the concept of network slicing.
FIG. 8 is an exemplary diagram illustrating another example of an architecture for implementing the concept of network slicing.
FIG. 9 illustrates an example of a dual 5G satellite access according to an embodiment of the present disclosure.
FIG. 10 illustrates an example of a traffic switching according to an embodiment of the present disclosure.
FIG. 11a is a first example of a multi connectivity according to an embodiment of the present disclosure. FIG. 11b is a second example of a multi connectivity according to an embodiment of the present disclosure. FIG. 11c is a third example of a multi connectivity according to an embodiment of the present disclosure. FIG. 11d is a fourth example of a multi connectivity according to an embodiment of the present disclosure.
FIG. 12 is an example of a single 3GPP access connectivity according to an embodiment of the present disclosure.
FIG. 13 is an example of a dual 3GPP access connectivity according to an embodiment of the present disclosure.
FIG. 14 is an example of limiting an allowed NSSAI.
FIG. 15 is an example of limiting a PDU sessions.
FIG. 16a and FIG. 16b are examples of procedures according to the first example of the present disclosure.
FIGS. 17a and 17b are examples of procedures according to the second example of the present disclosure.
FIG. 18 illustrates examples of operations according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

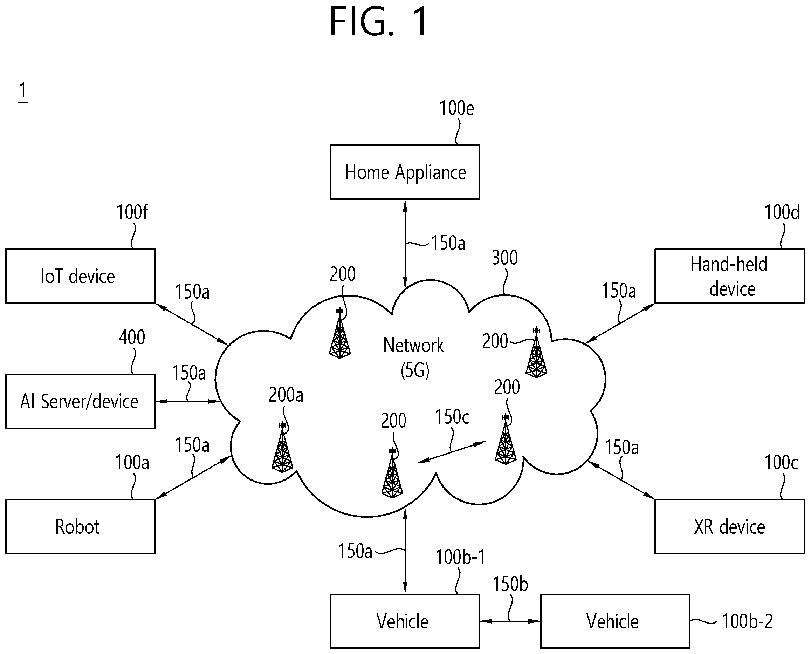

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

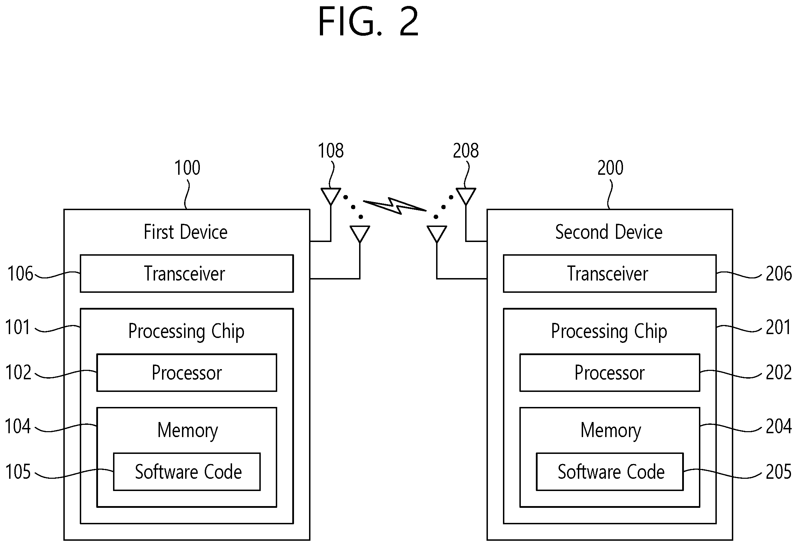

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

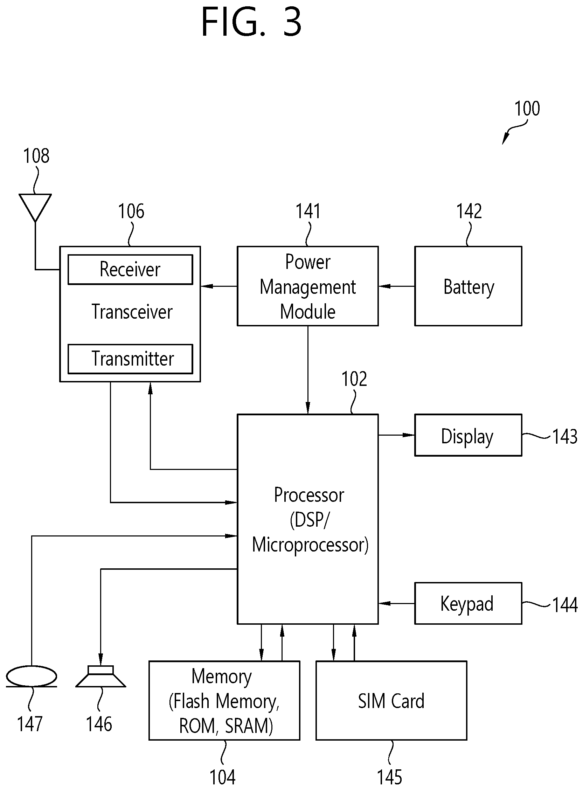

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

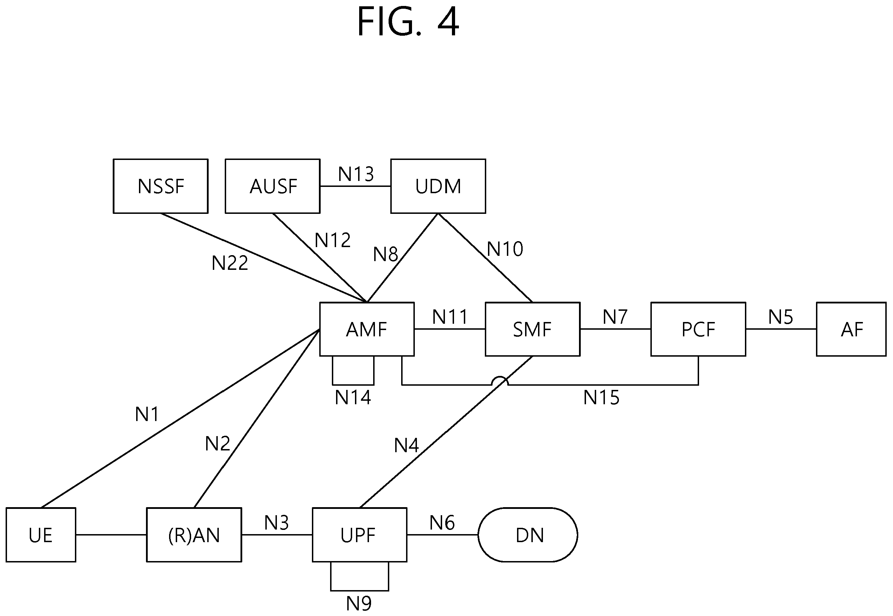

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Reference may be made to section 4.2.2.2 of 3GPP TS 23.502 V16.3.0 (2019-12).

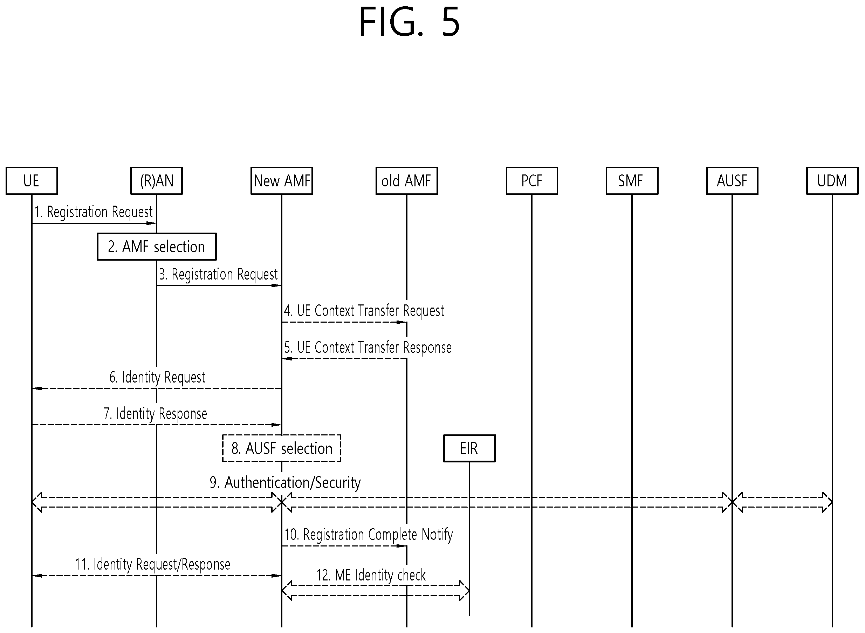

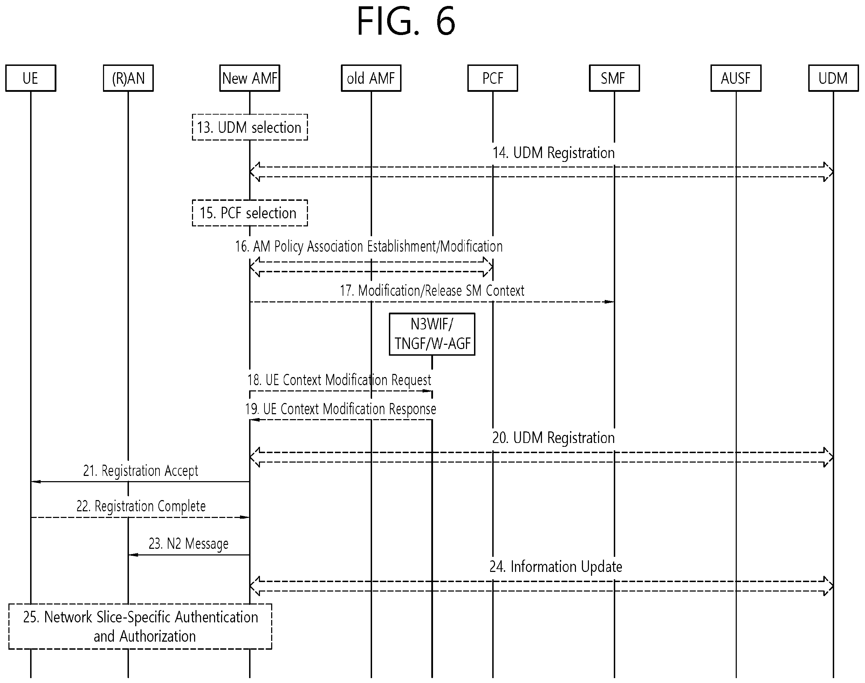

FIGS. 5 and 6 show an example of a registration procedure to which implementations of the present disclosure are applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included, and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization (NSSAA) procedure.

### <Network Slice>

Hereinafter, network slicing to be introduced in next-generation mobile communication will be described.

Next-generation mobile communication introduces the concept of network slicing in order to provide various services through one network. Here, the network slicing is a combination of network nodes having functions necessary to provide a specific service. A network node constituting a slice instance may be a hardware independent node or a logically independent node.

Each slice instance may be composed of a combination of all nodes necessary to configure the entire network. In this case, one slice instance may independently provide a service to the UE.

Alternatively, the slice instance may be composed of a combination of some nodes among nodes constituting the network. In this case, the slice instance may not provide a service to the UE alone, but may provide a service to the UE in association with other existing network nodes. In addition, a plurality of slice instances may provide a service to the UE in association with each other.

A slice instance is different from a dedicated core network in that the entire network node including the Core Network (CN) node and the RAN can be separated. In addition, a slice instance is different from a dedicated core network in that network nodes can simply be logically separated.

For reference, for a network slice, quota may be used.

For example, a quota related to a network slice may include a quota for the maximum number of UEs. The quota for the maximum number of UEs may mean the maximum number of terminals that can use a network slice at the same time. As an example, each network slice information may include quota information for the maximum number of UEs (e.g., 10 pieces, 1000000 pieces, etc.).

For example, a quota related to a network slice may include a quota for the maximum number of PDU sessions. The quota for the maximum number of PDU sessions may mean the maximum number of concurrent PDU sessions supported in the network slice. For example, the maximum number of concurrent (concurrent) PDU sessions supported in a network slice may mean the maximum number of PDU sessions established at the same time in one network slice related to a DNN (Data Network Name) defined by S-NSSAI.

In 5G mobile communication, network slice quota event notification may be supported in the network slice. For example, event notification about a quota related to a network slice may be supported. For example, an AF may request an event notification about a quota related to a network slice in 5GS. Then, AF may be notified of quota for attributes related to network slices in 5GS. For example, 5GS may inform the AF whether the quota for a particular attribute has reached a specified threshold. AF may then influence the 5GS routing decision.

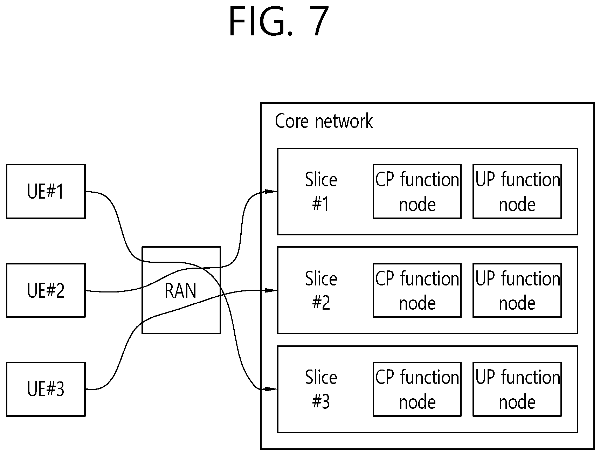

**FIG. 7** **is an exemplary diagram illustrating an example of an architecture for implementing the concept of network slicing.**

As can be seen with reference to FIG. 7, the Core Network (CN) may be divided into several slice instances. Each slice instance may include one or more of a CP function node and a UP function node.

Each UE may use a network slice instance suitable for its own service through the RAN.

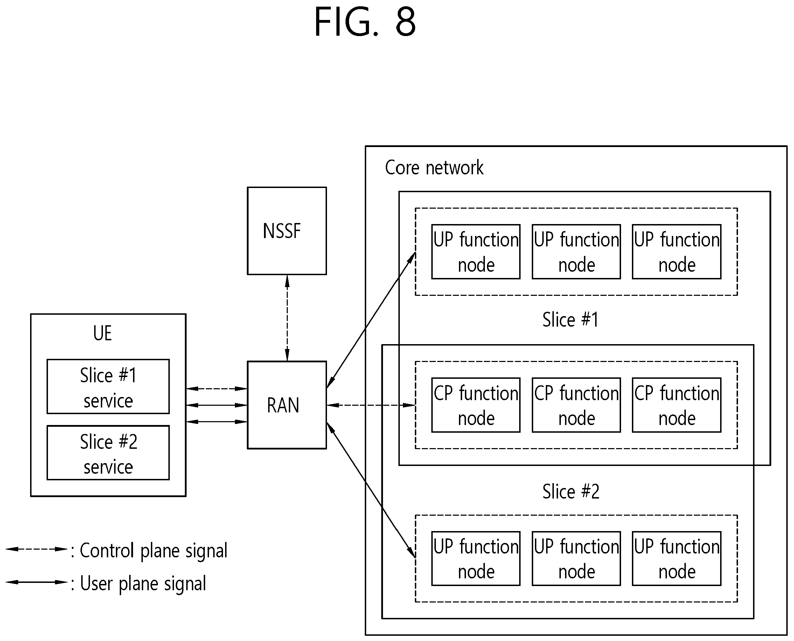

Unlike shown in FIG. 7, each slice instance may share one or more of a CP function node and a UP function node with another slice instance. This will be described with reference to FIG. 8 as follows.

**FIG. 8** **is an exemplary diagram illustrating another example of an architecture for implementing the concept of network slicing.**

Referring to FIG. 8, a plurality of UP functional nodes is clustered, and similarly, a plurality of CP functional nodes is also clustered.

And, referring to FIG. 8, slice instance #1 (or referred to as instance #1) in the core network includes the first cluster of UP functional nodes. And, the slice instance #1 shares a cluster of CP functional nodes with slice #2 (or referred to as instance #2). The slice instance #2 includes a second cluster of UP functional nodes.

The illustrated NSSF selects a slice (or instance) that can accommodate the service of the UE.

The illustrated UE may use service #1 through the slice instance #1 selected by the NSSF, and may use service #2 through the slice instance #2 selected by the NSSF.

In 3GPP, a study titled FS_DualSteer (Study on Upper layer traffic steering, switching and split over dual 3GPP access - SP-220445) is being discussed. Dual Steer may include use cases and service requirements related to steering, splitting, and switching UE traffic across two 3GPP access links, for example. Specifically, the study is being conducted for objectives such as the following examples. Examples of use cases and service requirements may be found in TR 22.841 V1.1.0 "Study on Upper layer traffic steer, switch and split over dual 3GPP access".

Examples of objectives related to dual steering are as follows.

Assuming only a single subscription exists for two 3GPP access links, including the following scenario, additional use cases and potential service requirements that could benefit from UE traffic support for higher layer steering, split, and switching in the 5GS (e.g., related to the same data session) are studied:
- Single PLMN, PLMN plus (standalone) NPN, two PLMNs
- Same or different 3GPP RAT (NR or NTN, NR, NTN, or LTE)

Note: NTN may refer to an NR-based satellite access that includes various orbits (e.g., GEO/MEO/LEO). GEO/MEO/LEO stand for Geostationary Earth Orbit (GEO), Medium Earth Orbit (MEO), and Low Earth Orbit (LEO), respectively.

For PLMN plus PLMN/NPN scenarios, the two networks may be managed by the same operator or by different operators (assuming a business agreement exists between the operators).

The study related to dual steering includes a gap analysis concerning support for use cases identified by existing service requirements and functions, including the potential applicability of existing multi-NW requirements (e.g., TS 22.261 V19.3.0 Sections 6.1, 6.3, 6.18, 6.41).

The use case examples in TR 22.841 V1.1.0 are as follows.

This describes an example of an use case for a dual 5G satellite access in a maritime scenario.

This use case describes a scenario where an autonomous ship is remotely controlled from land. The ship has a UE served by two satellite RANs (GEO and LEO) belonging to the same PLMN managed by the 5G satellite operator. The ship UE has a single PLMN subscription.

Dual 5G satellite access is applied to accommodate the large data traffic volumes required for remote control operations. To enhance autonomous ship operation performance, delay-sensitive applications (e.g., remote control operations, collision/accident prevention, emergency management) utilize LEO satellite links with smaller UE-to-ground propagation delays (LEO max 30ms vs. GEO max 280ms, TS 22.261 V19.3.0 Clause 7.4.1). Other applications (e.g., delay-sensitive applications such as sensor data monitoring, video surveillance, etc.) may use GEO satellite links or aggregate traffic across both accesses.

The following preconditions may apply to this use case.

The autonomous ship may be, for example, a KASS (Korean Autonomous Surface Ship). This autonomous ship may support an dual 5G satellite connectivity (GEO and LEO).

The UE installed on the autonomous ship has a subscription to use the GEO and LEO satellite services of the 5G satellite operator.

The UE installed on the autonomous vessel registers and connects to both GEO and LEO satellite RANs.

Pursuant to the service agreement between the autonomous vessel management company and the 5G satellite operator, the 5G satellite network maintains the following policies for the autonomous ship's UE:
- Data traffic for latency-sensitive applications is routed via LEO satellite links whenever available.
- Data traffic for delay-tolerant applications is aggregated via LEO and GEO satellite links.

For use cases related to autonomous ships, service flows such as the example below may be applied.

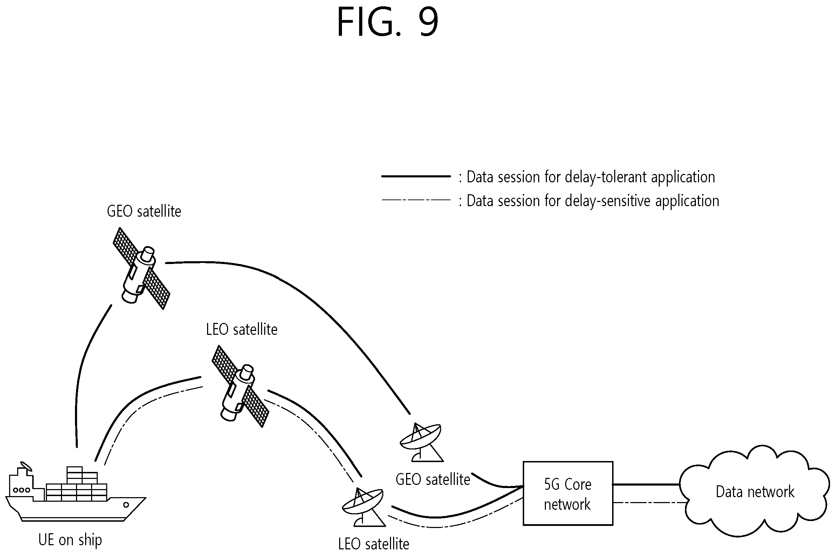

Referring to FIG. 9, a specific example of dual 5G satellite access during autonomous ship operation is illustrated.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 9** **illustrates an example of a dual 5G satellite access according to an embodiment of the present disclosure.**
1. Autonomous ships are located at sea and can be remotely controlled by a coastal control center. An autonomous vessel may have two active data sessions: one for remote control operations and one for monitoring the vessel's sensor data. According to agreed policies, remote control operation traffic (e.g., delay-sensitive traffic) is routed via LEO satellite links, while sensor data monitoring traffic (e.g., delay-tolerant traffic) is aggregated via LEO and GEO satellite links.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

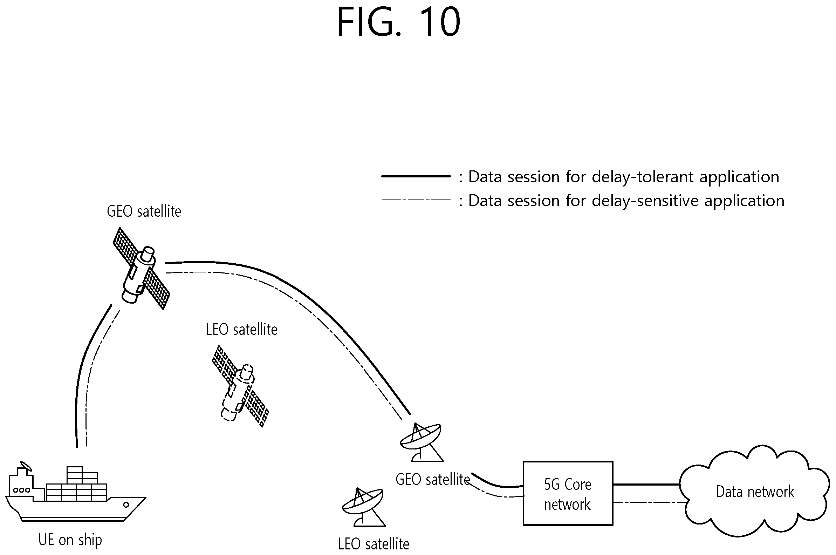

**FIG. 10** **illustrates an example of a traffic switching according to an embodiment of the present disclosure.**

FIG. 10 illustrates an example of traffic switching due to disconnection from the LEO satellite access network.

2. When LEO satellite access becomes unavailable (e.g., due to loss of line of sight between the UE and the satellite). Consequently, all traffic routed via LEO satellite access is redirected to GEO satellite access while maintaining the continuity of the data session. Applications for ship remote control (latency-sensitive) detect the increased communication delay and adjust their operation accordingly.

3. After a short time, LEO satellite access becomes available again. Therefore, the traffic distribution between the two satellite access points returns to the state seen in step 1.

The postconditions are as follows. The remote control center controls the autonomous ship throughout the route, and the autonomous ship may successfully arrive at its destination.

This describes examples of existing functions that encompass some or all of the use case functionality.

The ATSSS functionality specified in TS 23.501 V17.2.2 Section 5.32 supports dual user plane connections between a UE using one 3GPP access network and one non-3GPP access network and the data network.

The 5G system shall be capable of dynamically offloading a portion of traffic based on operator policy, considering traffic load and traffic type (e.g., offloading from a 3GPP RAT to a non-3GPP access technology).

According to operator policy, a 5G system may provide simultaneous data transmission over different access technologies (e.g., NR, E-UTRA, non-3GPP) to access one or more 3GPP services.

When a UE uses two or more access technologies simultaneously, the 5G system must be able to optimally distribute user traffic by selecting one of the access technologies in use, considering factors such as the service, traffic characteristics, radio characteristics, and the UE's movement speed.

The 5G system shall support UEs with multiple radio and single radio capabilities.

The 5G system may provide services using satellite access.

A satellite-enabled 5G system shall support various configurations where the radio access network is a satellite NG-RAN, a non-3GPP satellite access network, or both.

Potential new requirements needed to support use cases may include the following examples. The 5G system must support mechanisms to coordinate, split, and transfer user plane traffic across two 5G satellite access networks belonging to the same PLMN, where the user plane traffic is anchored to the 5GC.

The use case for NTN-based dual 3GPP access is described.

When two 3GPP access links are integrated simultaneously and one of them is a non-terrestrial network, the following 5G services may be provided. This can be particularly useful in underserved areas where bandwidth is limited or access links are unstable:
- Extended mobile broadband
- Ultra-reliable service communication

Various service scenarios (e.g., residential users in remote areas, vehicles, high-speed trains, ships, or aircraft passengers) may benefit from combining terrestrial and non-terrestrial access, or combining two non-terrestrial access methods (e.g., GSO and NGSO-based), to meet target service performance in terms of data speed and/or reliability.

In areas where service is not provided, the bandwidth offered by terrestrial-based access (e.g., NR or LTE) may be limited at the cell edge. Adding NTN-based NG-RAN can achieve the targeted perceived data speed.

In certain scenarios, such as inside high-speed trains, the service area may not be completely uniform along the track. The desired stability may be provided through multi connectivity, including NTN-based NG-RAN.

Therefore, a single UE can be connected and simultaneously served by the following examples:
- One NTN-based 3GPP access and one ground-based 3GPP access
- One NTN-based 3GPP access (NGSO) and another NTN-based 3GPP access (GSO)
- One NTN-based 3GPP access (NGSO) via two different satellites from the same constellation.

Dual access aggregation may occur for the uplink or downlink or both.

The same or different gNBs may provide service to an NR cell via a terrestrial access network and a satellite access network (e.g., transparent payload on board a satellite).

An NTN-based NG-RAN may refer to transparent payload satellites as well as, for example, regenerative payload satellites equipped with some gNB functions.

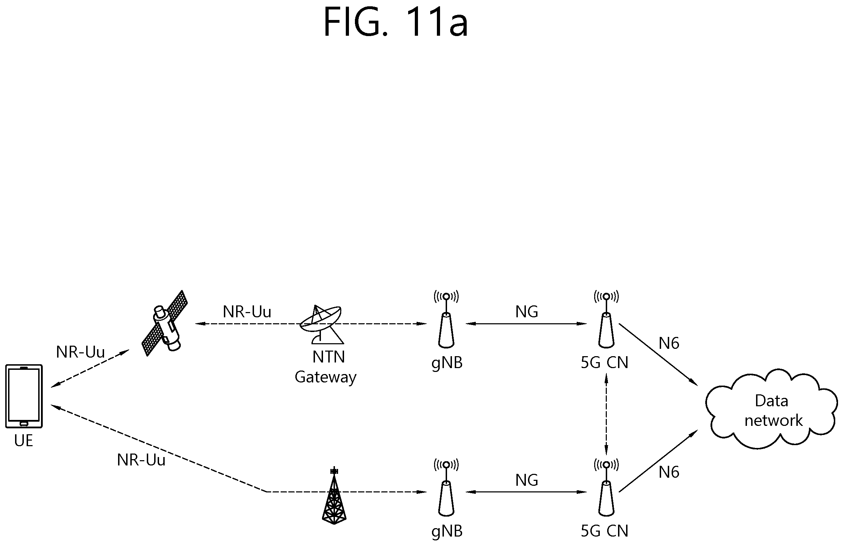

Referring to FIGS. 11a through 11d below, examples a) through d) are described.

### a) Multi-connectivity that includes transparent payload NTN-based NG-RAN and terrestrial NG-RAN

The UE connects to the 5GCN simultaneously via two accesses (e.g., transparent NTN-based NG-RAN and cellular NG-RAN). It is assumed that the NTN gateway is located within the PLMN area of the cellular access network.

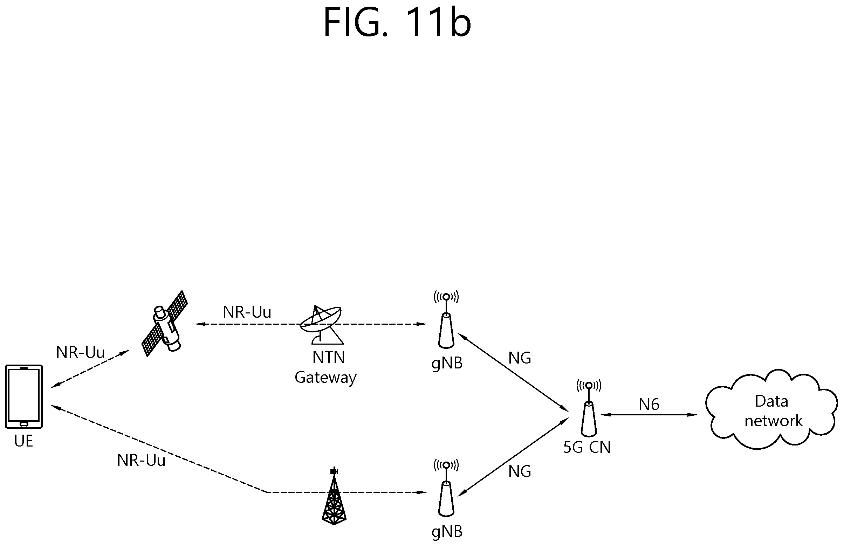

Referring to the examples in FIGS. 11a and 11b, an example of multi-connectivity that includes a transparent payload NTN-based NG-RAN and a terrestrial NG-RAN is described.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

FIG. 11a is a first example of a multi connectivity according to an embodiment of the present disclosure.

In the example of FIG. 11a, different operators may manage two PLMNs for multi-connectivity (assuming a business agreement exists between the two operators).

The example of FIG. 11a illustrates multi-connectivity that includes different PLMNs of a transparent NTN-based NG-RAN and a cellular NG-RAN.

As shown in FIG. 11a, the UE may connect to an access based on a transparent NTN-based NG-RAN (e.g., satellite, NTN gateway, gNB, access via the first operator's 5G CN). Additionally, the UE may connect to an access based on a terrestrial NG-RAN connected to the second operator's 5G-CN.

Alternatively, as exemplified in FIG. 11b, the two accesses for multi connectivity may be managed by the same operator.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 11b** **is a second example of a multi connectivity according to an embodiment of the present disclosure.**

In the example of FIG. 11b, PLMNs may be managed by the same operator. FIG. 11b depicts multi-connectivity (same PLMN) including transparent NTN-based NG-RAN and cellular NG-RAN.

### b) Multi-connectivity including two transparent NTN-based NG-RAN accesses

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

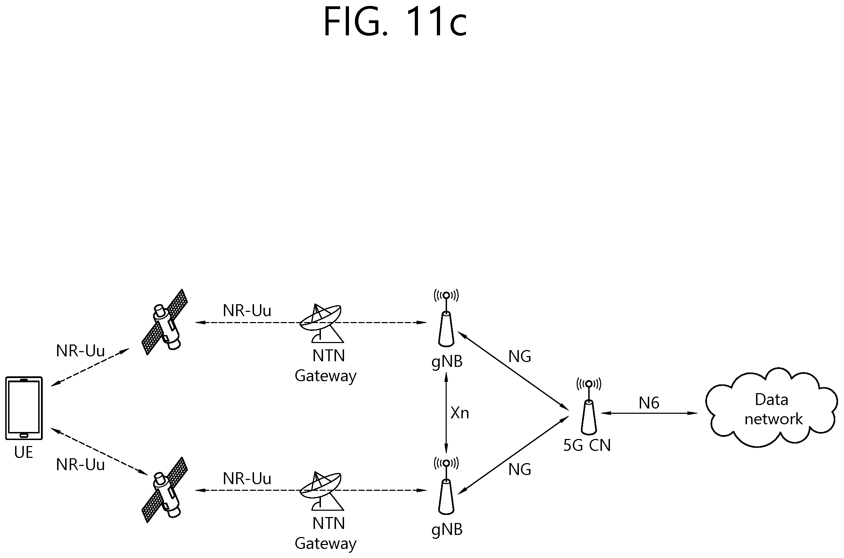

**FIG. 11c** **is a third example of a multi connectivity according to an embodiment of the present disclosure.**

FIG. 11c illustrates a multi connectivity between two transparent NTN-based NG-RANs.

For example, referring to FIG. 11c, multi-connectivity may include a combination of two transparent NTN-based NG-RANs (e.g., GSO and NGSO-based). This can be useful for providing service to UEs in areas where service is not provided. The example in FIG. 11c illustrates that a relatively low-latency NGSO-based NG-RAN may be used to support latency-sensitive traffic, while a GSO-based NG-RAN may be employed to provide additional bandwidth to meet target throughput requirements.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

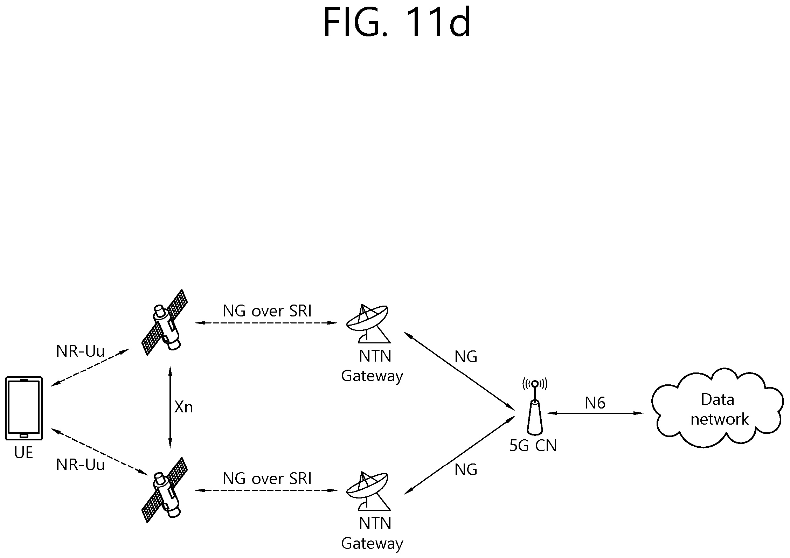

**FIG. 11d** **is a fourth example of a multi connectivity according to an embodiment of the present disclosure.**

FIG. 11d illustrates an example of a multi connectivity between two regenerative NTN-based NG-RANs (e.g., gNB onboard).

The example according to FIG. 11d is c) an example of combining two regenerative NTN-based NG-RANs (gNBs onboard) via an inter-satellite link through two satellites in the same constellation.

For reference, FIG. 11d is provided as an example. Other architectures (e.g., satellite-ground split NG-RAN architecture) may be considered. SRI denotes the satellite radio interface in FIG. 11d.

Examples of prerequisites related to this use case are as follows.

There may be some coverage overlap between the two related NG-RAN access links.

If the PLMNs of the two access links are the same, the UE connects to the 5GC providing both access links.

The 5GC is aware of the characteristics of each of the two access links.

If each access link has a different PLMN, the UE also gains access to the other network through a roaming agreement. Information about the characteristics of each access link may be exchanged between the two networks.

The UE is in connected mode on one or more access links.

The slice may be deployed and may be managed on both access links.

An example of the service flow related to this use case is as follows.

The UE performs the configuration of a VoIP, video, or data service over one 3GPP access link, but the QoS (e.g., throughput, latency, etc.) may be insufficient. If another 3GPP access link is available, this link is activated and combined with the first link to support the QoS required for the service.

Depending on the target QoS of the service, user plane traffic on the connection may be intelligently coordinated, split, and switched bidirectionally between the two 3GPP NG-RAN access links based on specific performance characteristics of each access link, such as delay, throughput, jitter, and error rate.

The QoS requirements for user plane traffic may be determined through specific policies related to different data flows or different traffic types within the same data flow.

Traffic is steered/split between access links based on QoS requirements such as latency, throughput, jitter, and error rate, traffic characteristics, wireless link conditions, and the UE's mobility rate. For example, traffic requiring low latency may be best split/steered to the access link with the lowest latency characteristics.

In the event of a handover, temporary wireless link failure, or congestion on one access link, user plane traffic may be switched to the remaining active access link. When the wireless link is re-configured, the user plane is re-split/steered across the two access links according to QoS.

The data volume and other traffic statistics reported from each access link are used for billing purposes.

According to the post-conditions, a dual NG-RAN access connection that includes at least NTN may support targeted QoS that a single access cannot support, thanks to the appropriate steering, splitting, and switching of user plane traffic.

Examples of existing capabilities that partially or fully encompass the use case functionality are as follows.

This use case may leverage and extend some of the following existing service requirements:
- Multiple Access Technology (See TS 22.261 V19.3.0 S6.3)
- Multi-network connectivity and Service Provisioning between Operators (See TS 22.261 V19.3.0 S6.18)
- Network Slicing (see TS 22.261 V19.3.0 S6.1)
- Efficient User Plane (see TS 22.261 V19.3.0 S6.5)

5.5.6 Potential new requirements necessary to support use cases include, for example, the following:
Based on the use of at least one NR satellite RAT, the 5G system should support simultaneous data transmission for a UE related to the same data session across two 3GPP 5G access networks, depending on operator policy. Based on the connection conditions of the two access networks (e.g., radio characteristics, mobility, congestion) and the UE's movement speed, the 5G system may optimally distribute user traffic between the two access networks.

When two 5G access networks are used simultaneously for the same data session, the 5G system may collect charging information for both links simultaneously.

Note that when the two 5G access networks belong to different PLMNs, single subscription and data anchoring to the HPLMN 5G CN are assumed.

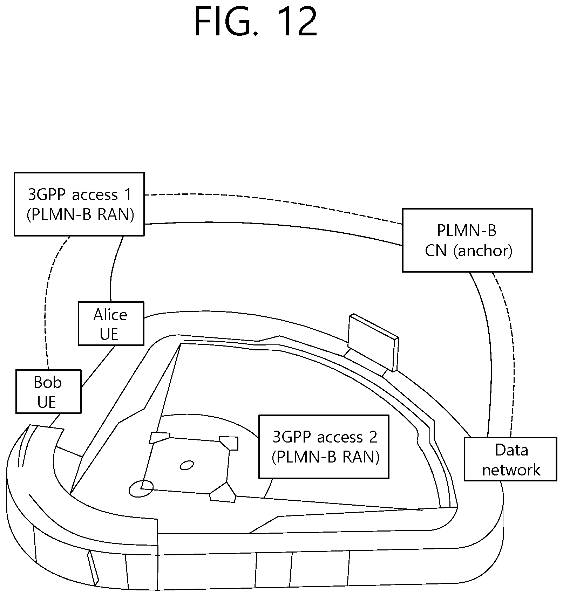

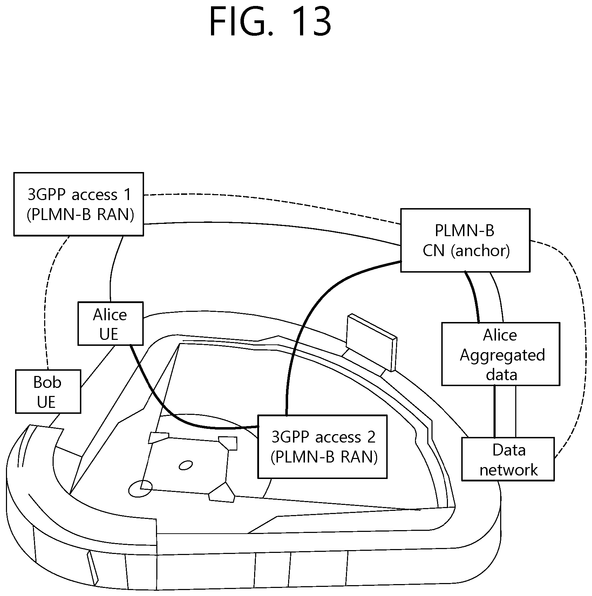

Below, with reference to FIG. 12 and FIG. 13, we describe the use case for the PLMN-to-PLMN scenario or the PLMN-SNPN scenario.

This example scenario depicts a scenario used in a stadium where an ad-hoc/in-venue 5G NR deployment (high-capacity) is provided by one SNPN or PLMN network (MNO-A), and 5G NR coverage is provided by another PLMN (MNO-B) outside the stadium. There is no network sharing between the two 5G networks. Here, MNO stands for Mobile Network Operator.

The above example may similarly apply to other regional business sites such as campuses, enterprises, shopping malls, and factories.

MNO-B has a business and roaming partnership with MNO-A that includes a contract to lease additional capacity (from MNO-A) to provide an ultra-broadband experience to certain MNO-B premium customers (e.g., "golden" customers). The agreement between MNO-A and MNO-B includes the capability to allow MNO-B users' data traffic to utilize additional NR connection links in PLMN-A, enabling connection at faster data speeds (including anchoring and aggregation to the CN in HPLMN). These capabilities are assumed to be supported by the CNs of both PLMNs and the UE (of the golden MNO-B user), and are associated with a set of traffic policies and conditions negotiated by the MNOs. These capabilities may be controlled by the HPLMN and provisioned (to UE and CN entities).

Examples of preconditions related to this use case are as follows.

Alice and Bob have come to the stadium to see a concert by their favorite singer. Alice is a golden subscriber of MNO-B, and Bob is a "regular" MNO-B customer. Referring to the examples in FIG. 12 and FIG. 13, Bob UE (Bob's UE) and Alice UE (Alice's UE) are shown.

Both UEs are camped on and registered on MNO-B's network and are in the Idle state. Alice's UE supports dual (NR) radio.

Alice's specific traffic policy, part of the MNO-B "Golden User" contract, includes dual access usage for high-quality video calls based on QoS or traffic type. Otherwise, Alice's UE must use MNO-B single access/link.

The service flows in FIGS. 12 and 13 are as follows:
The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 12** **is an example of a single 3GPP access connectivity according to an embodiment of the present disclosure.**

Referring to FIG. 12, Bob UE and Alice UE are shown. In FIG. 12, both Bob UE and Alice UE connect to the data network in PLMN-B based on 3GPP Access 1.
1) Before the concert begins, Alice and Bob make voice calls to their best friends, describing the stadium atmosphere and promising to share concert videos later. Both use a single 3GPP access connection (via PLMN-B).

FIG. 12 illustrates an example of the Alice & Bob data session using a single 3GPP access connection, as per Step 1.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 13** **is an example of a dual 3GPP access connectivity according to an embodiment of the present disclosure.**

Referring to FIG. 13, Alice's UE uses both a connection based on 3GPP Access 1 and a connection based on 3GPP Access 2.

2) When the concert begins, Alice and Bob decide to start a video call (with friends) to share the real-time experience (high-quality video configuration). Alice's UE registers with NW-A and configures a dual access connection spanning both networks. Bob's UE continues to use single access via PLMN-B.

FIG. 13 illustrates Alice's data session scenario using dual 3GPP access connections according to Phase 2.

3) Alice and Bob end the video call and continue enjoying the concert.

According to the use case referenced in FIG. 12 and FIG. 13, Alice's video quality was significantly better than Bob's.

Examples of existing functions that partially or fully encompass the use case functionality are described.
A) Steps 2 and 3 include a feature called ATSSS (Access Traffic Steering, Switching, Splitting). A feature similar to the one described in this use case is supported by TS 25.301 V17.0.0 Section 5.3.2, but it is limited to 3GPP access and non-3GPP dual access.
B) Existing service requirements (e.g., TS 22.261 V19.3.0 S6.18 and S6.41) capture some general multi-NW connection requirements but do not fully address or satisfy specific target use cases and functionalities. For example, in prior arts, for users subscribed to a single operator, the use of multiple service networks operated by different operators is under the control of the home operator. For example, according to prior arts, when multiple operators provide the same service, the UE must preferentially receive the subscribed service from the home operator's network unless directed otherwise by the home operator's network. In this case, if the service is unavailable on the home operator's network (e.g., due to insufficient network coverage), the UE may receive the service from another operator's network. In prior arts, the QoS provided by a partner operator's network for the same service may vary depending on the agreement between the two operators and may differ from that provided by the home operator's network.

Examples of potential new requirements needed to support use cases are as follows.

A 5G system must be able to support mechanisms that coordinate, split, and switch a user plane traffic session for a UE across two 5G networks belonging to two different PLMN operators (one of which is the HPLMN), or between the HPLMN and an SNPN, for a single data session.

It is assumed that an HPLMN subscription is used to access both networks, data traffic is anchored to the HPLMN, and appropriate business agreements exist between the two network operators, including specific traffic routing policies based on geographic location, subscription, and traffic type.

This section describes examples of use cases for UEs utilizing terrestrial and satellite access.

Satellite access, known for its wide coverage, may enhance service availability in areas where terrestrial access network coverage or propagation conditions (e.g., multipath interference) are poor. When a high-speed moving UE requests real-time services such as IMS voice/video conferencing, it can be dual-connected to the 5G system simultaneously via terrestrial and satellite access. This enables the UE to receive continuous and stable service while minimizing the impact of terrestrial access network outages.

Eric is traveling to Saudi Arabia for a business trip. He takes the Haramain high-speed train, crossing 450 kilometers of desert at 300 km/h from Makkah to Madinah to visit a client. Even while traveling, he must handle urgent business via online video conference and resolve all issues before arrival.

An example of the prerequisite conditions is as follows.

TerrA's terrestrial access network provides good coverage in urban areas, suburban areas, and intermediate railway stops, but coverage is limited in rural areas and deserts between intermediate stops. Operator SatA's satellite access network (e.g., LEO) covers the entire country, and SatA may provide communication services independently. For reference, TerrA is a terrestrial network operator, and SatA is a satellite network operator.

Based on this agreement, TerrA may route, switch, or split the user's traffic to the SatA network's data path and may integrate it into TerrA's 5GC, considering SatA's service availability or coverage.

Eric's UE (e.g., mobile phone or wireless network card) is capable of dual 3GPP radio access, including satellite access, and is subscribed to the service-approved TerrA (PLMN NetA).

By default, only terrestrial access is enabled.

An example service flow is as follows.

Eric arrives at Makkah Train Station and activates the UE's satellite access while waiting to check in.

The UE registers with NetA based on service preferences (e.g., instant chat when terrestrial access is preferred, HD TV when satellite access is preferred) via terrestrial access and satellite access networks.

After Eric connects, the online video conference initially starts via the terrestrial access network. During the one-hour meeting, the UE's traffic autonomously steers, switches, or splits between the terrestrial and satellite network traffic paths with the assistance of TerrA's core network, converging at TerrA's core network to ensure the video conference proceeds without interruption.

Upon the train's arrival at its destination, Eric deactivates the satellite access function, and the UE updates its registration with NetA.

The postconditions related to the use case example are as follows: for example, the video conference completes smoothly without interruption. The user remains unaware of any path adjustments, switching, or splitting during the video conference.

Examples of existing features that partially or fully encompass the use case functionality are described as follows.

The 5G system shall support UEs with both multi-radio and single-radio capabilities.

The 5G system must support the capability to steer the UE to select a specific 3GPP access network according to operator policy.

Depending on operator policy, the 5G system may provide simultaneous data transmission over different access technologies (e.g., NR, E-UTRA, non-3GPP) to access one or more 3GPP services.

A UE may simultaneously use two or more access technologies. In this case, the 5G system must be able to optimally distribute user traffic by selecting one of the access technologies in use, considering factors such as service, traffic characteristics, radio characteristics, and the UE's movement speed.

The 5G system must support data transmission optimized for different access technologies (e.g., 3GPP, non-3GPP) for UEs accessing the network simultaneously via different connections.

Service continuity between 5G terrestrial access networks owned by the same operator or by another operator under contract, and 5G satellite access networks, must be supported by the 5G system.

Examples of potential new requirements needed to support use cases are as follows.

For example, a 5G system must support a mechanism that coordinates a user's traffic between different 3GPP access networks and core networks for a UE using dual 3GPP access, considering factors such as service preference, traffic characteristics, radio characteristics, and QoS. For example, the 5G system should support seamless service continuity by switching and splitting user traffic paths between different 3GPP access networks and core networks for UEs using dual 3GPP access (e.g., NR and satellite access), based on network availability, service preference, etc.

The above use cases show that services may be provided to the UE via two 3GPP accesses (or 3GPP access links). For example, the UE may receive services from two 3GPP accesses connected to a single CN (Core Network) (or from two 3GPP accesses belonging to the same network). Alternatively, the UE may receive services from two 3GPP accesses connected to different CNs (or from two 3GPP accesses belonging to different networks). Here, the network may be a PLMN or an NPN.

Furthermore, for certain services, traffic may be steered, switched, and split through a PDU Session formed via two 3GPP accesses. Here, this PDU session may be referred to as a Multi-Access (MA) PDU Session. In prior arts, MA PDU Sessions were established via 3GPP access and non-3GPP access; in the present disclosure, a PDU Session may be established via two 3GPP accesses.

For certain services, traffic may be transmitted via a PDU session established through a single 3GPP access.

In the dual steering related example described earlier, it is assumed that the UE has a single subscription. According to prior arts, the UE registers with only one 5G CN for the 3GPP access. Furthermore, prior arts do not define a method for providing services to the UE through two 3GPP accesses.

However, the UE may need to register with two 5G CNs to receive services via two 3GPP accesses. Furthermore, to receive services via two 3GPP accesses, the UE may also need to perform separate registration procedures for each 3GPP access with a single 5G CN.

Furthermore, if the UE registers with two 5G CNs, it may require selection and/or determination of which 5G CN to establish a PDU session with for a given service and which 5G CN to transmit traffic to.

To achieve this, UEs must perform registration using two 3GPP RATs simultaneously within a single network (PLMN or SNPN). Alternatively, the UE must perform registration simultaneously on different networks for each 3GPP RAT (both networks being PLMN, both networks being SNPN, or one network being PLMN and the other being SNPN). Furthermore, 3GPP RAT must support various configurations such as NR+NR, NR+E-UTRA, TN-NTN, and NTN-NTN.

The use case and service requirements for providing services to terminals by simultaneously using two 3GPP accesses over 5GS through the Dual Steer item have been defined (TR 22.841 V1.1.0 "Study on Upper layer traffic steer, switch and split over dual 3GPP access").

Meanwhile, groups related to network slices have also been introduced. For example, groups may be created to allow only specific slices to be used together, and only the slices included in that group may be used simultaneously. Groups of network slices can be supported based on the subscriber information of the terminal. For example, NSSRG (Network Slice Simultaneous Registration Group) information related to the network group may be included in the subscriber information. Based on the NSSRG subscriber information, the AMF may control which slices can be used simultaneously.

For example, if the NSSRG values for Slice A, Slice B, and Slice C are 1, and the NSSRG values for Slice D and Slice E are 2, then Slice A, Slice B, and Slice C can be used simultaneously. However, slices with different NSSRG values, such as Slice A and Slice D, cannot be used simultaneously.

To support NSSRG-based operation, when transmitting the Allowed NSSAI to the terminal, the AMF may check the NSSRG values. The AMF must always include slices with the same NSSRG in the Allowed NSSAI.

However, there is an issue with dual steer, where 5GS simultaneously uses two 3GPP accesses to provide services to the terminal: operation based on NSSRG is not supported. For example, if the terminal performs registration twice via 3GPP access, different AMFs may be selected for each 3GPP access. In this case, since each AMF assigns an Allowed NSSAI to the terminal, the problem arises where slices with different NSSRG values are assigned to the terminal. That is, the NSSRG of the slices included in the Allowed NSSAI received from the first AMF may differ from the NSSRG of the slices included in the Allowed NSSAI received from the second AMF.

In other words, dual steering is being discussed, where 5GS simultaneously uses two 3GPP accesses to provide services to the terminal. The Network Slice Simultaneous Registration Group (NSSRG) has been introduced to allow only slices belonging to the same network slice group to be used together. Based on the NSSRG, the AMF may control which slices can be used simultaneously. If a terminal performs registration twice via different 3GPP accesses, an issue may arise where different AMFs are selected for each 3GPP access. In this case, since each AMF assigns an Allowed NSSAI to the terminal, the terminal may be assigned slices with different NSSRG values.

This problem occurs identically even when the terminal registers with different PLMNs in 3GPP access and non-3GPP access.

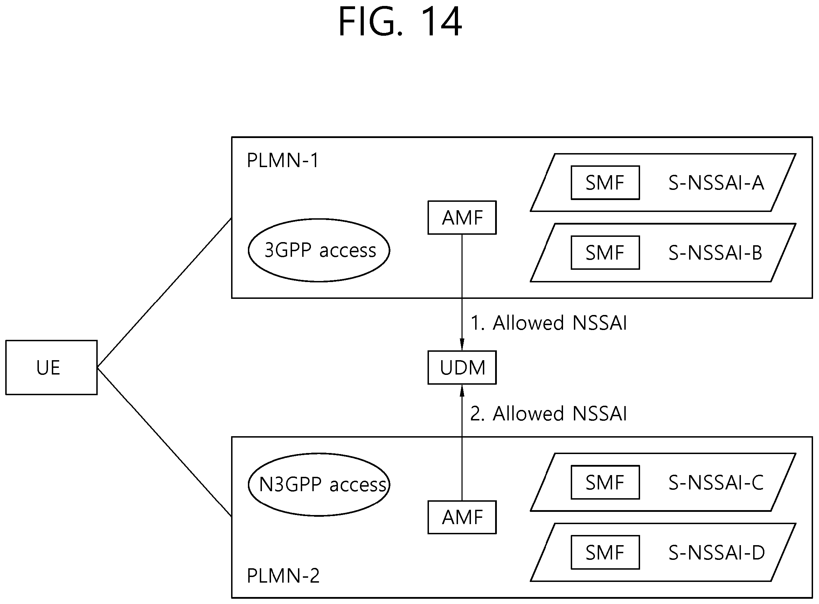

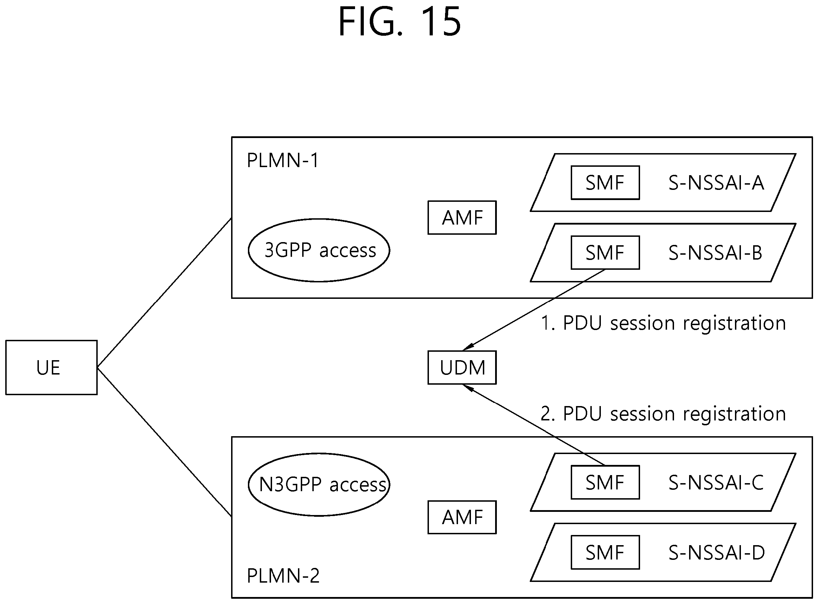

To resolve these issues, methods such as those shown in FIGS. 14 and 15 have been proposed in the prior arts. However, the exemplary methods based on FIGS. 14 and 15 still suffer from the problem of inefficient signaling. The method according to the prior arts is described with reference to FIGS. 14 and 15.

FIG. 14 and FIG. 15 are related to NSSRG restrictions for various access types across multiple PLMNs.

Question #1: Should requested NSSAIs across different access types in different PLMNs share a common NSSRG value?

Question #2: If the answer to Question #1 is 'Yes', how does the network (i.e., different AMFs in different PLMNs) enforce the common NSSRG value restriction for the requested NSSAI?

Regarding the two questions above, the following discussions took place.

The discussion related to Question #1 is as follows.

"Subscription information for the UE is included within the allowed NSSAI. Subscription information may include Network Slice Simultaneous Registration Group (NSSRG) information, which limits the S-NSSAIs that can be provided to the UE simultaneously for each S-NSSAI. If an S-NSSAI has associated NSSRG information, the S-NSSAI within the allowed NSSAI must share at least one NSSRG.

"The Serving AMF may have provided the configured NSSAI to the UE, and the UE may have indicated support for the subscriber information-based network slice simultaneous registration restriction function. In this case, the AMF also provides the UE with the NSSRG information related to the HPLMN's S-NSSAI within the mapping information for the configured NSSAI. Upon receiving the NSSRG value included in the network slicing configuration information, the UE must include only the S-NSSAI sharing the common NSSRG in the requested NSSAI based on the received information."

"A UE supporting the subscriber information-based network slice concurrent registration restriction function, when receiving NSSRG information along with the configured NSSAI, shall request only S-NSSAIs sharing one or more common NSSRGs across all access types at any time."

Observation 1: NSSRG information is a subscriber information-based restriction per UE, regardless of whether the UE is registered to a single PLMN or to another PLMN. The NSSRG information configured in the UE is related to the S-NSSAI of the HPLMN in the mapping information of the configured NSSAI. An UE receiving an NSSRG value must include only S-NSSAIs that share a common NSSRG with the requested NSSAI.

Observation 2: The answer to Question #1 is 'Yes'.

The discussion related to Question #2 is as follows.

Regarding Question #2, network enforcement is only necessary when a UE registers with multiple PLMNs but does not check the NSSRG information of the requested NSSAI in other PLMNs. There are two alternatives for network enforcement:

- Option A: Allowed NSSAI restriction-based solution.

The key principle is that the serving AMF restricts the allowed NSSAI for the current PLMN based on the existing allowed NSSAI (if any) for other PLMNs stored in the UDM, ensuring that the UE's allowed NSSAI for different PLMNs share a common NSSRG.

The serving AMF receives the requested NSSAI from the UE and may not have NSSRG information related to the allowed NSSAI of another PLMN stored in the UDM. In this case, the serving AMF determines the allowed NSSAI based on the received NSSRG information. Subsequently, the serving AMF stores the NSSRG information related to the currently allowed NSSAI per PLMN in the UDM. When the serving AMF receives a requested NSSAI from the UE and NSSRG information related to the allowed NSSAI of another PLMN stored in the UDM is available, the serving AMF verifies whether the S-NSSAI of the requested NSSAI shares a common NSSRG with the allowed NSSAI of the other PLMN.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 14** **is an example of limiting an allowed NSSAI.**

For example, in the example shown in FIG. 14, it is assumed that the UE's subscription data includes NSSRG#A {HPLMN S-NSSAI-1, HPLMN S-NSSAI-2} and NSSRG#B {HPLMN S-NSSAI-1, HPLMN S-NSSAI-3}.

At time T1, the UE registers with PLMN#1, and at time T2, the UE registers with PLMN#2.

According to Option A, the serving AMF restricts the allowed NSSAI for the current PLMN based on the existing allowed NSSAI(s) for other PLMNs stored in the UDM, causing the UE's allowed NSSAI for different PLMNs to share a common NSSRG. Consequently, results such as those shown in Table 3 may be derived.

**[Table 3]**

| | Requested NSSAI | Allowed NSSAI/Rejected NSSAI |
|---|---|---|
| PLMN#1 | Requested NSSAI = S-NSSAI-A + S-NSSAI-B; | Allowed NSSAI = S-NSSAI-A + S-NSSAI-B; |
| | The mapping of requested NSSAI = S-NSSAI-A < - > HPLMN S-NSSAI-1, S-NSSAI-B < - > HPLMN S-NSSAI-2; | The mapping of Allowed NSSAI = S-NSSAI-A < - > HPLMN S-NSSAI-1, S-NSSAI-B < - > HPLMN S-NSSAI-2; |
| PLMN#2 | Requested NSSAI = S-NSSAI-C + S-NSSAI-D; | Allowed NSSAI = S-NSSAI-C; |
| | The mapping of requested NSSAI = S-NSSAI-C <-> HPLMN S-NSSAI-1, S-NSSAI-D < - > HPLMN S-NSSAI-3; | The mapping of Allowed NSSAI = S-NSSAI-C < -> HPLMN S-NSSAI-1; |
| | | Rejected NSSAI = S-NSSAI-D; |

According to the example in Table 3, for PLMN#1, the UE may transmit the requested NSSAI including HPLMN S-NSSAI-1 and HPLMN S-NSSAI-2. HPLMN S-NSSAI-1 may be mapped to S-NSSAI-A, and HPLMN S-NSSAI-2 may be mapped to S-NSSAI-B. In PLMN #1, the allowed NSSAIs may be S-NSSAI-A and S-NSSAI-B.

The description of the requested NSSAI for PLMN #2 can refer to the description of the requested NSSAI for PLMN #1. The allowed NSSAI in PLMN #2 may be S-NSSAI-C.

Observation 3: Option A complies with the principle that the S-NSSAI of an allowed NSSAI must share at least one NSSRG. There is an issue that frequently signals the UDM to store and delete the allowed NSSAI per serving PLMN, which affects the AMF and UDM.

### - Option B: PDU session limit-based solution

The key principle is that when the requested NSSAI for different PLMNs does not share a common NSSRG, the AMF determines the allowed NSSAI to provide the PLMN based on the received NSSRG information. However, in this scenario, the AMF cannot apply restrictions on the allowed NSSAI for different PLMNs. The UDM restricts PDU sessions for other PLMNs based on the NSSRG value related to the HPLMN S-NSSAI used by the SMF to register the PDU session with the UDM.

In this option, the UE may request a new PDU session configuration, and the SMF registers the PDU session with the UDM using the HPLMN S-NSSAI. In this case, the UDM verifies whether the HPLMN S-NSSAI for the existing PDU session stored in the UDM shares a common NSSRG with the HPLMN S-NSSAI for the new PDU session. If not, the UDM cancels the registration of the previously registered SMF. The SMF then initiates the PDU session release procedure. Otherwise, the UDM accepts the SMF's registration for the new PDU session.

Referring to FIG. 15, a specific example of Option B is described.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 15** **is an example of limiting a PDU sessions.**

According to the example in FIG. 15, the SMF of PLMN-1 may perform PDU registration with the UDM. The SMF of PLMN-2 may also perform PDU registration with the UDM.

The UDM verifies whether the HPLMN S-NSSAI for an existing PDU session stored in the UDM shares a common NSSRG with the HPLMN S-NSSAI for the new PDU session. If not, the UDM cancels the registration of the previously registered SMF. Then, this SMF initiates the PDU session release procedure. Otherwise, the UDM accepts the SMF's registration for the new PDU session.

For example, assume the UE's subscription data includes NSSRG#A {HPLMN S-NSSAI-1, HPLMN S-NSSAI-2} and NSSRG#B {HPLMN S-NSSAI-1, HPLMN S-NSSAI-3}, as shown in FIG. 15.

At time T1, the UE registers with PLMN#1, and at time T2, the UE registers with PLMN#2. When the operation according to Option B is performed, results similar to the example in Table 4 may be derived.

**[Table 4]**

| | Requested NSSAI | Allowed NSSAI/Rejected NSSAI |
|---|---|---|
| PLMN#1 | Requested NSSAI = S-NSSAI-A + S-NSSAI-B; | Allowed NSSAI = S-NSSAI-A + S-NSSAI-B; |
| | The mapping of requested NSSAI = S-NSSAI-A < - >PLMN S-NSSAI-1, S-NSSAI-B < - >PLMN S-NSSAI-2; | The mapping of Allowed NSSAI = S-NSSAI-A < - >PLMN S-NSSAI-1, S-NSSAI-B < - >PLMN S-NSSAI-2; |
| PLMN#2 | Requested NSSAI = S-NSSAI-C+ S-NSSAI-D; | Requested NSSAI = S-NSSAI-C+ S-NSSAI-D; |
| | The mapping of requested NSSAI = S-NSSAI-C < - >PLMN S-NSSAI-1, S-NSSAI-D < - >PLMN S-NSSAI-3; | The mapping of Allowed NSSAI = S-NSSAI-C < - >PLMN S-NSSAI-1, S-NSSAI-D < - >PLMN S-NSSAI-3; |

Table 4 may be interpreted in the same manner as Table 3.

At time T3, the UE initiates a new PDU session for S-NSSAI-B in PLMN#1. At T4, the UE initiates a new PDU session for S-NSSAI-D in PLMN#2. UDM determines that S-NSSAI-B and S-NSSAI-D cannot share a common NSSRG value and decides to deregister the SMF providing the PDU session in PLMN#1.

Observation 4: Option B has the problem that the S-NSSAI of the allowed NSSAI for different PLMNs cannot be configured to share at least one NSSRG. PDU sessions spanning different PLMNs may be restricted based on the NSSRG value associated with the S-NSSAI for the PDU session.

Based on the examples in FIG. 14 and FIG. 15, the conclusions and proposals of the prior arts are as follows.

Conclusion 1: The answer to Question #1 is 'Yes'. This is because NSSRG information is a UE-specific subscription-based restriction, regardless of whether the UE is registered in a single PLMN or registered in another PLMN.

Conclusion 2: The NSSRG information configured in the UE is related to the S-NSSAI of the HPLMN in the mapping information for the configured NSSAI. A UE receiving an NSSRG value must include only the S-NSSAI that shares a common NSSRG with the requested NSSAI. Related to Question #2, network enforcement is only necessary when a UE registers with multiple PLMNs but fails to verify the NSSRG information for the requested NSSAI across different PLMNs.

However, the prior arts according to the examples in FIGS. 14 and 15 still have issues.

In the prior arts illustrated in FIGS. 14 and 15, whenever the AMF transmits an Allowed NSSAI to the terminal, it performs the operation of registering the Allowed NSSAI in the UDM. Alternatively, whenever the terminal creates a PDU session, the operation of registering the Allowed NSSAI in the UDM is performed. Using this method, it may prevent slices with different NSSRGs from being used. However, registering the Allowed NSSAI in the UDM causes the problem of signaling to the UDM occurring whenever the Allowed NSSAI changes. Furthermore, if the UDM checks the NSSRG when creating a PDU session, it creates the problem of changing the concept that, as previously agreed, the Allowed NSSAI does not include slices with different NSSRGs.

The various examples of the present disclosure propose methods for supporting NSSRG when a UE performs dual 3GPP registration. For reference, the methods of the present disclosure may be applied in the same manner even when the UE registers with different PLMNs in 3GPP access and non-3GPP access.

The approach for supporting registration in dual 3GPP access according to various examples of the present disclosure comprises a combination of one or more of the operations/configurations/steps described below.

In this specification, the terms "UE" (User Equipment) and "terminal" may be used interchangeably.

In the present disclosure, the terms "Subscriber" and 'User' may be used interchangeably.

In the present disclosure, the terms "Application Function (AF)" and "Application Server (AS)" may be used interchangeably.

The methods presented below may be performed or used in combination or as complementary measures.

### 1. First Example of the Present Disclosure

The first example of disclosure in the present disclosure includes operation based on NSSAAF.

In the first example of the present disclosure, before the AMF transmits the Allowed NSSAI to the terminal, the AMF may verify with the NSSAAF whether the NSSRG is satisfied. To this end, the NSSAAF may store and manage the Allowed NSSAI assigned per terminal and the NSSRG for each slice. For example, to perform this operation, a new service may be defined for the NSSAAF service, or an existing NSSAAF service may be extended for use. For instance, as shown in the following Table 5, in addition to the existing Nnssaaf_NSSAA and Nnssaaf_AIW services, an additional Nnssaaf_NSSRG service may be added. Alternatively, the existing Nnssaaf_NSSAA service may be extended for use.

**[Table 5]**

| Service Name | Service Operations | Operation Semantics | Example Consumer(s) |
|---|---|---|---|
| Nnssaaf_NSSAA | Authenticate | Request/Response | AMF |
| | Re-AuthenticationNotification | Notify | AMF |
| | RevocationNotification | Notify | AMF |
| Nnssaaf_AIW | Authenticate | Request/Response | AUSF |
| Nnssaaf_NSSRG | Registration | Request/Response | AMF |
| | Update | Request/Response | AMF |
| | Deregistration | Request/Response | AMF |

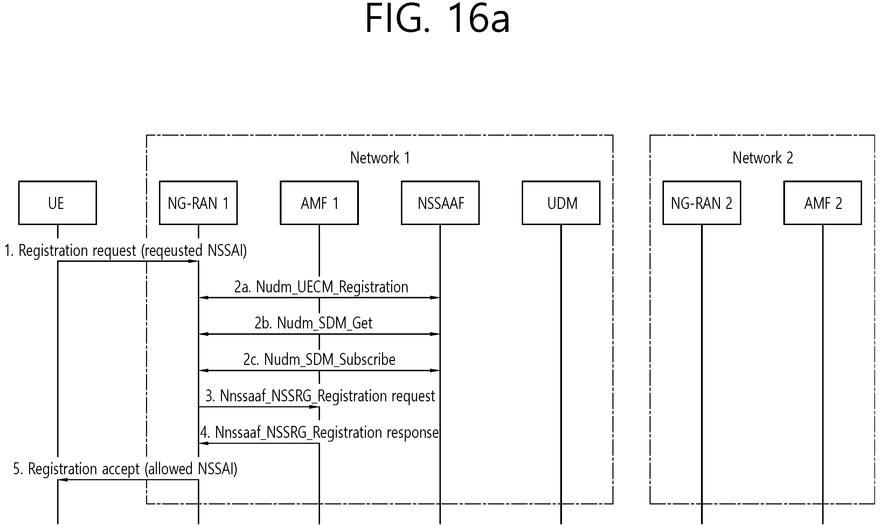

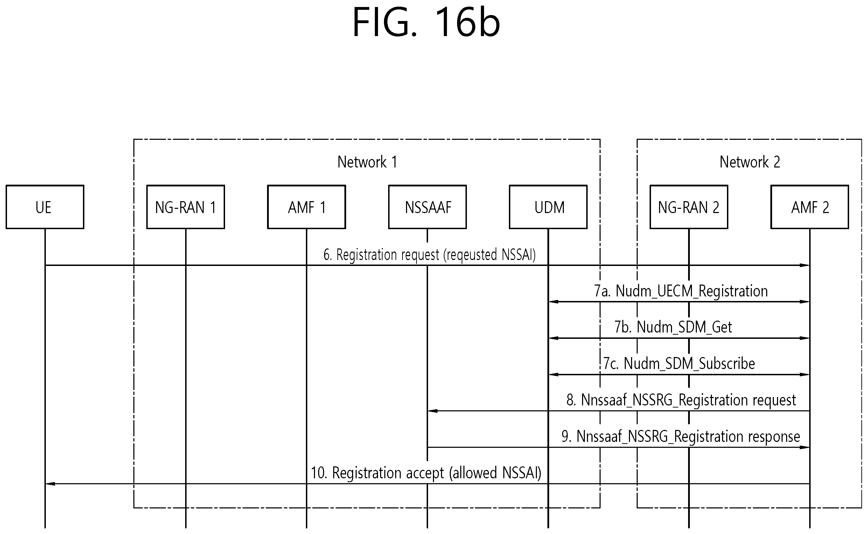

Referring to FIGS. 16a and 16b, the specific operation according to the first example disclosed in the present disclosure will be described. In the examples of FIGS. 16a and 16b, descriptions of operations identical to those of the prior arts are omitted, and the focus is on the matters proposed in the present disclosure.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 16a** **and** **FIG. 16b** **are examples of procedures according to the first example of the present disclosure.**
1. The terminal may transmit a Registration Request message. The Registration Request message may include a Requested NSSAI. The Requested NSSAI may include the slices the terminal wishes to use.
2. The AMF may perform registration with the UDM. For example, the AMF may perform registration of a terminal with the UDM. If the AMF does not have subscriber information for the terminal, it may retrieve subscriber information from the UDM based on Nudm_SDM_Get. The AMF may perform Nudm _SDM _Subscribe to receive changes to subscriber information.
3. The AMF may transmit registration request messages related to the NSSRG to the NSSAAF. For example, the AMF may determine slices that can be transmitted to the terminal based on the terminal's subscriber information. The AMF transmits information to the NSSAAF to verify the NSSRG to ensure that the slices to be sent to the terminal satisfy the NSSRG. Here, slices satisfying the NSSRG means that the slices allowed for the UE have at least one identical NSSRG value. At this time, the AMF may send the slice list determined by the AMF for transmission to the terminal, along with the NSSRG values for those slices, to the NSSAAF.
   Additionally, the AMF may transmit information that distinguishes the terminal's 3GPP access from other 3GPP accesses, to the NSSAAF. This information may include information such as the access type, RAT type, and an ID that distinguishes the registration.
   The NSSAAF may compare the received slice list and received NSSRG value with the slice list and NSSRG value stored by the NSSAAF. If the NSSAAF does not have stored slice information related to the slice currently used by the terminal, the NSSAAF may store the slice list and NSSRG value transmitted by the AMF, information distinguishing the access, AMF information, etc.
4. The NSSAAF may transmit a registration response message to the AMF. For example, the NSSAAF may inform the AMF that the NSSRG is satisfied.
5. The AMF may transmit a registration acceptance message to the terminal. For example, the AMF transmits an Allowed NSSAI that satisfies the NSSRG to the terminal.
6. The terminal may transmit a Registration Request message. For example, the terminal performs the registration procedure using another NG-RAN within another network or another NG-RAN within the same network. The registration request message may include a Requested NSSAI. The Requested NSSAI may include the slices the terminal wishes to use.
7. The AMF may perform registration with the UDM. For example, the AMF may perform registration for a terminal with the UDM. If the AMF does not possess the terminal subscriber information, the AMF may retrieve the subscriber information from the UDM based on Nudm_SDM_Get. The AMF may perform Nudm_SDM_Subscribe to receive changes to the subscriber information.
8. The AMF may transmit a registration request message related to the NSSRG to the NSSAAF. For example, the AMF may determine slices that can be transmitted to the terminal based on the terminal's subscriber information. The AMF transmits information to the NSSAAF to verify the NSSRG to ensure that the slices to be transmitted to the terminal satisfy the NSSRG. Here, slices satisfying the NSSRG means that the slices to be transmitted to the UE have at least one identical NSSRG value. At this time, the AMF may send to the NSSAAF both the slice list determined by the AMF as transmissible to the terminal and the NSSRG values for those slices.
   Additionally, the AMF may transmit information that distinguishes the terminal's 3GPP access from other 3GPP accesses, to the NSSAAF. This information may include details such as access type, RAT type, and an ID that distinguishes registrations.
   The NSSAAF may compare the received slice list and received NSSRG value with the slice list and NSSRG value stored by the NSSAAF.
9. The terminal may not be aligned with the slices and NSSRG that the UE is currently using. For example, the slices transmitted by AMF2 may not have one or more identical NSSRG values. Another example is that the NSSRG of the slices transmitted by AMF1 and the slices transmitted by AMF2 may not have at least one identical NSSRG value. In this case, the NSSAAF can inform AMF2 that the NSSRG is not satisfied and provide the current terminal's slice list and NSSRG information. Here, the current terminal's slice list and NSSRG information may refer to the slice list and NSSRG information used by the terminal via another network or another NG-RAN within the same network.
10. The AMF may determine the Allowed NSSAI to transmit to the terminal based on the information transmitted by the NSSAAF. If necessary, the AMF may repeat steps 8 through 9 before performing step 10.

If the terminal's Allowed NSSAI requires updating, the AMF (e.g., AMF1 or AMF2) may perform the operations described in steps 3, 4, 8, and 9 for the NSSAAF. Additionally, when the terminal deregisters, the AMF may notify the NSSAAF of the deregistration and request that the NSSAAF delete the terminal's currently used slice information. For example, the AMF may directly request the NSSAAF to delete the slice information, or the AMF may inform the NSSAAF that the terminal has deregistered and allow the NSSAAF to delete the information. The NSSAAF may retain the terminal's slice and NSSRG information if the terminal is registered with another AMF. If the terminal is not registered with another AMF, the NSSAAF may delete the terminal's information. To do this, the AMF may use services such as Nnssaaf_NSSRG_Update or Nnssaaf_NSSRG_Deregistration.

### 2. The Second Example of the Present Disclosure

The second example disclosed in the present disclosure includes operation based on NSACF.

The method according to the second example of the present disclosure has the disadvantage that it can only be used when the same NSACF is used for all slices. However, it has the advantage that NSSRG may also be applied when a PDN connection is established in the EPC.

The AMF may transmit an Nnsacf_NSAC_NumberOfUEsUpdate request. The AMF may also transmit NSSRG information for the slice to the NSACF. The NSACF stores information such as the UE ID, S-NSSAI, Access Type, and NSSRG. Additionally, the NSACF verifies the NSSRG information for the slices currently being used by the UE and checks whether the slice sent by the AMF is a slice that can be used concurrently with the slice currently in use by the UE. If it is a slice that should not be used concurrently, the NSACF may transmit an Nnsacf_NSAC_NumberOfUEsUpdate response to the AMF, including information indicating that the NSSRG is not satisfied as a result.

By default, if the AMF is configured to perform Network Slice Admission Control (NSAC) for slices, the AMF may perform the NSAC. However, to apply NSSRG, the AMF must be configured to perform the NSAC for all slices. Alternatively, the AMF may be configured to perform the NSAC only when subscriber information includes NSSRG information.

When the AMF only needs to perform NSSRG checks without needing to perform NSAC, the AMF may include information in the Nnsacf_NSAC_NumberOfUEsUpdate request message to perform only NSSRG checks. Specifically, according to the prior arts, the AMF performs NSAC only if it is configured to do so. However, when performing NSAC solely for the purpose of checking the NSSRG without needing to perform NSAC, the AMF may include information instructing the NSACF to perform only the NSSRG check without executing NSAC. Alternatively, this information may specify that the maximum number of UEs for the slice should not be checked.

Before the AMF transmits the Registration Accept message, the AMF may configure the EAC (Early Admission Control) mode to active state for all slices to check the NSSRG via the NSACF. If the EAC mode is not active, the AMF may first transmit a Registration Accept that includes the Allowed NSSAI. Subsequently, the AMF can check the NSSRG from the NSACF. Depending on the check result, if necessary (e.g., if the NSSRG is unsatisfactory), the AMF may update the Allowed NSSAI via the UE Configuration Update procedure to ensure only slices satisfying the NSSRG are included in the Allowed NSSAI.

To support roaming, the HPLMN NSAC Admission Mode may always be configured to be used.

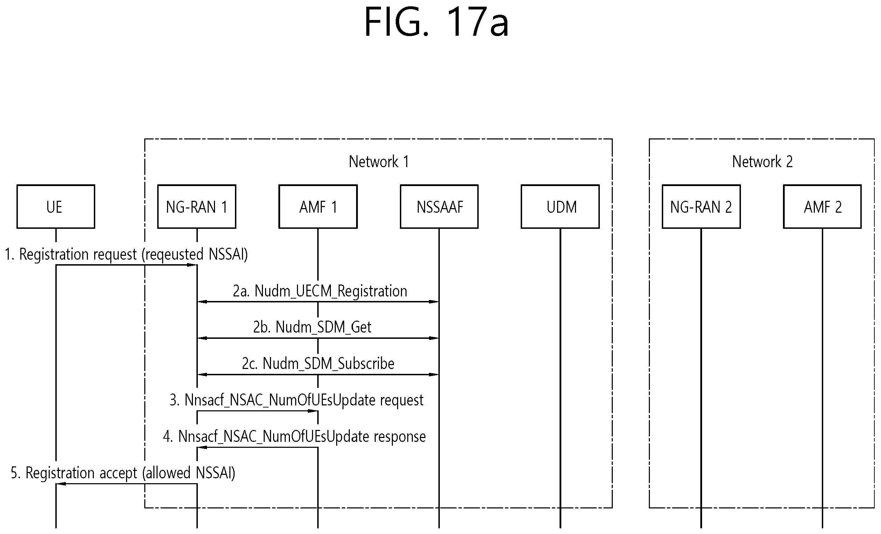

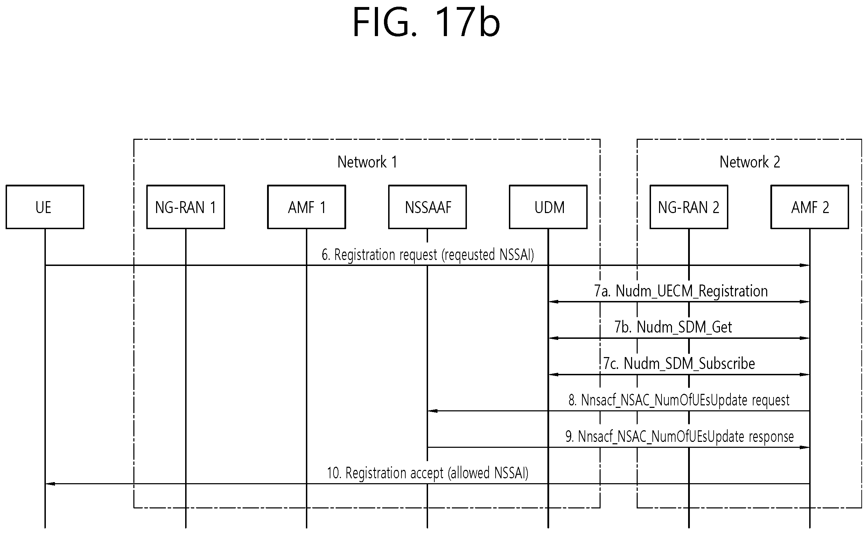

Referring to FIGS. 17a and 17b, the specific operation according to the second example of the present disclosure will be described. In the examples of FIGS. 17a and 17b, descriptions of operations identical to the prior arts are omitted, and the focus is on describing the matters proposed in the present disclosure.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIGS. 17a** **and** **17b** **are examples of procedures according to the second example of the present disclosure.**

1-2. The same operations as steps 1-2 in FIGS. 16a and 16b may be performed.

3. The AMF may transmit a NumOfUEsUpdate (Number of UEs Update) request message to the NSACF. For example, the AMF may determine the slices that can be transmitted to the terminal based on the terminal's subscriber information. To verify whether the slices to be transmitted to the terminal satisfy the NSSRG, the AMF may transmit an Nnsacf_NSAC_NumOfUEsUpdate request to the NSACF. At this time, the AMF may transmit both the slice list determined by the AMF for transmission to the terminal and the corresponding NSSRG values for those slices.

Additionally, the AMF may transmit information that distinguishes the terminal's 3GPP access from other 3GPP accesses, to the NSSAAF. This information may include information such as the access type, RAT type, and an ID that distinguishes registrations.

The NSACF may compare the received slice list and received NSSRG value with the slice list and NSSRG value stored by the NSSAAF. If slice information related to the slice currently used by the terminal is not stored, the NSACF may store the slice list and NSSRG value transmitted by the AMF, information distinguishing the access, AMF information, etc.

4. The NSACF may transmit response messages to the AMF. For example, the NSACF may inform the AMF that the NSSRG has been satisfied. At this time, the NSACF may separately transmit to the AMF whether the maximum number of UEs has been satisfied and whether the NSSRG has been satisfied.

For example, when the AMF transmits an Allowed NSSAI to a terminal, the AMF checks with the NSACF the number of terminals currently using the S-NSSAI. The AMF checks the number of terminals to limit the number of terminals simultaneously using a specific slice. Therefore, to transmit an Allowed NSSAI, the AMF may verify not only the NSSRG but also whether the maximum number of terminals is exceeded. An example service where the AMF checks the number of terminals using a slice with the NSACF to verify exceeding the maximum number is NumOfUEsUpdate.

5. The AMF may transmit a registration acceptance message to the terminal. For example, the AMF transmits an Allowed NSSAI that satisfies the NSSRG to the terminal.

6-7. The same operations as steps 6-7 in FIGS. 16a and 16b may be performed.

8. The AMF may transmit a NumOfUEsUpdate (Number of UEs Update) request message to the NSACF. For example, the AMF may determine the slices that can be transmitted to the terminal based on the terminal's subscriber information. To verify that the slices to be transmitted to the terminal satisfy the NSSRG, the AMF may transmit an Nnsacf_NSAC_NumOfUEsUpdate request to the NSACF. At this time, the AMF may transmit both the slice list it determined can be transmitted to the terminal and the corresponding NSSRG values for those slices.

Additionally, the AMF may transmit information that distinguishes the terminal's 3GPP access from other 3GPP accesses, to the NSSAAF. This information may include information such as access type, RAT type, and an ID that distinguishes registrations.

The NSACF may compare the received slice list and received NSSRG value with the slice list and NSSRG value stored by the NSSAAF.

9. The terminal's currently used slices may not be aligned with the NSSRG. For example, the NSSRG of slices transmitted by AMF2 may not match the NSSRG of the slices currently being used by the terminal. Another example is that the NSSRG of slices transmitted by AMF1 may not match the NSSRG of slices transmitted by AMF2. In this case, the NSACF may inform AMF2 that the NSSRG is not satisfied and may provide the current terminal's slice list and NSSRG information. Here, the slice list currently used by the terminal and NSSRG information may refer to the slice list and NSSRG information used by the terminal via another network or another NG-RAN within the same network.

10. The AMF can determine the Allowed NSSAI to transmit to the terminal based on the information transmitted by the NSACF. If necessary, the AMF may repeat steps 8 to 9 before performing step 10.

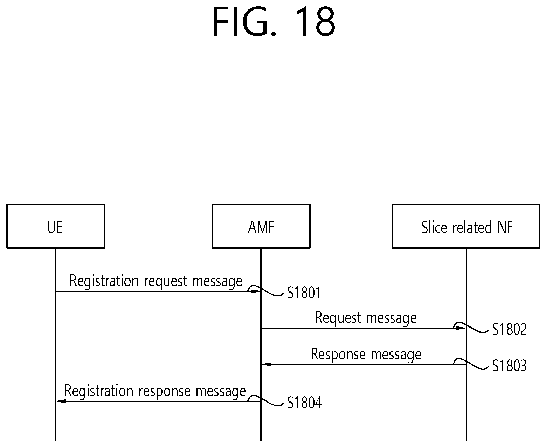

Hereinafter, with reference to FIG. 18, an example of operations according to an embodiment of the present disclosure is described. The example in FIG.18 may include operations based on the first and/or second examples of the present disclosure.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 18** **illustrates examples of operations according to an embodiment of the present disclosure.**

For reference, the procedure shown in FIG. 18 is merely an example, and the scope of the present disclosure is not limited by the example in FIG. 18.

For example, with respect to the example of FIG. 18, operations described in the examples of FIGS. 1 through 17a and 17b may also be applied. For instance, even operations or contents not directly described in the example of FIG. 18 may be applied, provided they are described in various examples disclosed in the present disclosure.

In the example of FIG. 18, slice-related NFs may be, for example, NSSAAF or NSSRG.

The operations shown in FIG. 18 are merely examples, and the scope of disclosure of the present disclosure is not limited to the operations shown in FIG. 18.

In step S1801, the UE may transmit a registration request message to the AMF. The registration request message may include a requested NSSAI. The requested NSSAI may include information related to one or more network slices.

In step S1802, the AMF may transmit the request message to an NF related to a slice.

For example, the request message may be a request message related to a network slice.

For example, based on the fact that the UE's subscriber information includes the slice group information and that the AMF is configured to verify the slice group information through the network entity, the AMF may transmit the request message related to the network slice.

For example, the request message may include a slice list including one or more network slices that can be transmitted to the UE, and slice group information related to each of the one or more network slices.

For example, the request message may further include the information distinguishing the UE's 3GPP access, and information that enables verification only of the slice group information.

For example, the NF related to the slice may determine whether the slice list included in the request message satisfies the conditions related to the slice group. For example, based on the slice list stored in the NF related to the slice and the stored slice group information related to the stored slice list, the NF related to the slice may determine whether the slice list included in the request message satisfies the conditions related to the slice group.

For example, if the stored slice list and the stored slice group information do not exist, the NF related to the slice may store the slice list and slice group information included in the request message.

For example, the AMF may determine one or more network slices that can be transmitted to the UE based on the UE's subscriber information and the requested NSSAI. A slice list including the determined one or more network slices may be included in the request message.

In step S1803, the NF related to the slice may send a response message to the AMF.

For example, the response message may include information related to whether the slice list satisfies the conditions related to the slice group, from the NF related to the slice.

For example, the conditions related to the slice group may include the condition that all network slices related to the UE, transmitted from one or more AMFs including the AMF to the NF related to the slice, have one or more common slice groups.

For example, based on the response message including information that the conditions related to the slice group are not satisfied, the response message may further include the slice list being used by the UE, and slice group information related to each network slice included in the slice list being used. For example, if the conditions related to the slice group are not satisfied, the NF related to the slice may transmit, to the AMF, a response message including the slice list currently in use by the UE and slice group information related to each network slice included in the slice list currently in use.

For example, the AMF may determine the allowed NSSAI based on the response message.

In step S1804, the AMF may transmit a registration response message to the UE. For example, the registration response message may be a registration accept message that includes the accepted NSSAI. Based on the response message, the AMF may transmit a registration accept message that includes the accepted NSSAI to the UE.

For example, based on the response message including information that the conditions related to the slice group are satisfied, the allowed NSSAI may include all of the one or more network slices included in the slice list (e.g., the slice list included by the AMF in the request message). In other words, since all network slices included in the slice list transmitted by the AMF satisfy the conditions related to the slice group, the AMF may include all network slices in the slice list within the allowed NSSAI.

For example, at least one network slice included in the allowed NSSAI may all be related to the same slice group.

According to one embodiment of the present disclosure, when performing dual registration, the AMF may provide the NSSAAF or the NSACF with slice information to be transmitted to the terminal and NSSRG information for the slice. Accordingly, the NSSAAF or NSACF may store this information and determine whether the NSSRG is satisfied by comparing this information with existing information.

The present disclosure may have various effects.

For example, based on Dual 3GPP access, NSSRG may be effectively supported even when registration procedures are performed separately.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of terminals (e.g., UE) described in the present disclosure may be implemented by the devices of FIGS. 1 to 3 described above. For example, the terminal may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal (e.g., UE) described in the present disclosure.

Additionally, instructions for performing operations of the terminal described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, UDM, H-PCF, NEF, AF, UDR, NSACF, NSSAAF, etc.) or base stations (e.g., NG-RAN, gNB, RAN, (R)AN, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method for performing communication, the method performed by an Access and Mobility Management Function (AMF) and comprising:
receiving, from a User Equipment (UE), a registration request message including requested network slice selection assistance information (NSSAI);
transmitting, to a network entity related to a slice, a request message related to the network slice,
wherein the request message includes a slice list including one or more network slices that can be transmitted to the UE and slice group information related to each of the one or more network slices;
receiving, from the network entity, a response message including information related to whether the slice list satisfies a condition related to a slice group; and
transmitting, to the UE, a registration accept message including an allowed NSSAI, based on the response message,
wherein at least one network slice included in the allowed NSSAI is related to the same slice group.

2. The method of claim 1, further comprising:
determining the one or more network slices that can be transmitted to the UE, based on subscriber information of the UE, and the requested NSSAI.

3. The method of claim 1 or claim 2, further comprising:
wherein the condition related to the slice group includes a condition that all network slices related to the UE, transmitted by one or more AMF including the AMF to the network slice have one or more common slice groups.

4. The method of any one of claims 1 to 3, further comprising:
determining the allowed NSSAI, based on the response message.

5. The method of any one of claims 1 to 4, further comprising:
wherein the request message related to the network slice is transmitted, based on that subscriber information of the UE includes the slice group information, and the AMF is configured to check the slice group information through the network entity.

6. The method of any one of claims 1 to 5,
wherein the allowed NSSAI includes all of the one or more network slices included in the slice list, based on that the response message includes information that the condition related to the slice group is satisfied.

7. The method of any one of claims 1 to 5,
wherein the response message further includes a slice list currently being used by the UE and slice group information related to each network slice included in the slice list currently being used by the UE, based on that the response message includes information that the condition related to the slice group is not satisfied.

8. The method of any one of claims 1 to 7,
wherein the request message further includes information distinguishing the 3GPP access of the UE, and information that enables verification only of slice group information.

9. The method of any one of claims 1 to 8,
wherein the network entity is NSSAAF or NSSRG.

10. An Access and Mobility Management Function (AMF) performing communication, the AMF comprising:
one or more transceivers;
one or more processors; and
one or more memories that may store instructions and be operatively connected to the one or more processors,
wherein operations performed based on the instructions being executed by the one or more processors include: the method of any one of claims 1 to 9.

11. A device performing communication, the device comprising:
one or more transceivers;
one or more processors; and
one or more memories that may store instructions and be operatively connected to the one or more processors,
wherein operations performed based on the instructions being executed by the one or more processors include: the method of any one of claims 1 to 9.

12. A non-transistory computer readable medium (CRM) for storing instructions, wherein operations performed based on the instructions being executed by one or more processors include: the method of any one of claims 1 to 9.

13. A method for performing communication, the method performed by a network entity related to a slice and comprising:
receiving, from an Access and Mobility Management Function (AMF) , a request message related to a network slice,
wherein the request message includes a slice list including one or more network slices that can be transmitted to a User Equipment (UE) and slice group information related to each of the one or more network slices;
based on a slice list stored in the network entity and stored slice group information related to the stored slice list, determining the slice list included in the request message satisfies a condition related to a slice group; and
transmitting, from the network entity, a response message including information related to whether the slice list satisfies the condition related to the slice group.

14. The method of claim 13, further comprising:
storing the slice list and slice group information included in the request message, when the stored slice list and the stored slice group information do not exist.

15. The method of claim 13 or claim 14, further comprising:
wherein the condition related to the slice group includes a condition that all network slices related to the UE, transmitted by one or more AMF including the AMF to the network slice have one or more common slice groups.

16. The method of any one of claims 13 to 15,
wherein the response message further includes a slice list currently being used by the UE and slice group information related to each network slice included in the slice list currently being used by the UE, based on that the response message includes information that the condition related to the slice group is not satisfied.

17. The method of any one of claims 13 to 16,
wherein the request message further includes information distinguishing the 3GPP access of the UE, and information that enables verification only of slice group information.

18. The method of any one of claims 13 to 17,
wherein the network entity is NSSAAF or NSSRG.

19. A network entity related to a slice configured to operate in a wireless communication system, wherein the network entity related to the slice comprising:
one or more transceivers;
one or more processors; and
one or more memories that may store instructions and be operatively connected to the one or more processors,
wherein operations performed based on the instructions being executed by the one or more processors include: the method of any one of claims 13 to 18.
